# EUROPÄISCHE PATENTANMELDUNG

(11) **EP 1 072 384 A2**
(43) Veröffentlichungstag der Anmeldung: **31.01.2001**
(21) Anmeldenummer: 00113770.2
(22) Anmeldetag: 29.06.2000
(51) Int. Cl.: B29C 45/17

(54) **Verfahren und Vorrichtung zur Herstellung eines Kunststoff-Formteils**

(30) Priorität: 29.06.1999 DE 19929700
(71) Anmelder: Bernhardt, Achim Roland, 63512 Hainburg (DE); Brozio, Reinhard, 63486 Bruchköbel (DE); Janisch, Andreas, 63450 Hanau (DE)
(72) Erfinder: Bernhardt, Achim Roland, 63512 Hainburg (DE); Brozio, Reinhard, 63486 Bruchköbel (DE); Janisch, Andreas, 63450 Hanau (DE)
(74) Vertreter: Stoffregen, Hans-Herbert, Dr. Dipl.-Phys.

(57) **Zusammenfassung**

Die Erfindung bezieht sich auf ein Verfahren und eine Vorrichtung und zur Herstellung eines Kunststoff-Formteils (12) umfassend die Verfahrensschritte Einspritzen einer plastischen Masse in einen geschlossenen Formhohlraum (16) durch eine erste Einlassöffnung (18), Einleiten eines Gasvolumens in die plastische Masse über eine zweite Einlassöffnung (26) zur Ausbildung eines Hohlraums (74), Ablassen des Gasvolumens aus dem Hohlraum (74) durch eine Auslassöffnung (50), Vergrößern eines Strömungsquerschnittes der zweiten Einlassöffnung (26) und Einleiten eines flüssigen Kühlmediums durch die zweite Einlassöffnung (26) und Durchströmen des Hohlraums (74) mit dem flüssigen Kühlmedium bei geregeltem Druck und/oder Volumen sowie Einleiten eines weiteren Mediums über die zweite Einlassöffnung (26) zum Austreiben des flüssigen Kühlmediums aus dem Hohlraum (74).

## Beschreibung

Die Erfindung bezieht sich auf ein Verfahren zur Herstellung eines Kunststoff-Formteils sowie auf eine Vorrichtung zur Durchführung des Verfahrens, umfassend ein Formwerkzeug mit einem die Form des Kunststoff-Formteils vorgebenden Formhohlraum, wobei das Formwerkzeug eine erste Einlassöffnung zum Einspritzen einer plastischen Masse in den Formhohlraum sowie eine zweite Einlassöffnung zum Einleiten eines Gasvolumens zur Ausbildung eines Hohlraums und/oder zum Einleiten eines Kühlmediums in den Hohlraum aufweist.

Aus DE 39 25 909 A1 ist ein Verfahren zur Herstellung eines Mehrkomponenten-Spritzgussteils und ein entsprechendes Spritzguss-Werkzeug bekannt. Um das Spritzgussteil in dem Spritzguss-Werkzeug schnell abkühlen zu lassen, ist eine Innenkühlung vorgesehen. Hierzu ist ein Injektor vorgesehen, der eine Verbindung mit dem von dem Spritzgussteil umschlossenen Hohlraum herstellt, damit das Spritzgussteil von einem Kühlfluid durchströmt wird.

Bei dem bekannten Verfahren wird als Kühlfluid Kühlgas vorgeschlagen, das über einen oder mehrere Injektoren in den von dem Gas ausgefüllten Hohlraum eingefüllt wird.

Es hat sich gezeigt, dass Kühlgas aufgrund seiner geringen Wärmekapazität nur bedingt geeignet ist, das Formteil zu kühlen.

Zur Verbesserung der Kühlwirkung wird in DE 195 19 801 A1 vorgeschlagen, über die Einlassöffnung zur Einleitung des Gasvolumens ein Austausch- bzw. Kühlmedium zuzuführen, wodurch zusätzlich eine Spülung und Zwangskühlung des Spritzgussformteils im Formwerkzeug von der Innenseite her erfolgt. Insbesondere bei der Verwendung eines flüssigen Kühlmediums wie Wasser hat sich herausgestellt, dass die Einlassöffnung zur Einleitung des Gasvolumens einen ausreichenden Strömungsquerschnitt nicht aufweist, um den erforderlichen Strömungsfluss für ein flüssiges Kühlmedium zu erreichen. Daher wird alternativ vorgeschlagen, das Austausch- bzw. Kühlmedium über eine zusätzlich vorgesehene Düse zuzuführen, was jedoch mit einem konstruktiven Aufwand und höheren Kosten verbunden ist.

Davon ausgehend liegt der vorliegenden Erfindung die Aufgabe zu Grunde, ein Verfahren sowie eine Vorrichtung insbesondere zur Durchführung des Verfahrens dahingehend weiterzubilden, dass ein hoher Kühleffekt des Formteils erreicht wird, ohne dass besondere Kühlungen des Formwerkzeuges selbst erforderlich sind.

Die Aufgabe wird erfindungsgemäß im Wesentlichen durch ein Verfahren gelöst, das die folgenden Verfahrensschritte umfasst:
a) Einspritzen einer plastischen Masse in einen geschlossenen Formhohlraum durch eine erste Einlassöffnung;
b) Einleiten eines Gasvolumens in die plastische Masse über eine zweite Einlassöffnung zur Ausbildung eines Hohlraums;
c) Ablassen des Gasvolumens aus dem Hohlraum durch eine Auslassöffnung;
d) Vergrößern eines Strömungsquerschnittes der zweiten Einlassöffnung und Einleiten eines flüssigen Kühlmediums durch die zweite Einlassöffnung und Durchströmen des Hohlraums mit dem flüssigen Kühlmedium bei geregeltem Druck und/oder Volumen;
e) Einleiten eines weiteren Mediums über die zweite Einlassöffnung zum Austreiben des flüssigen Kühlmediums aus dem Hohlraum.

Das erfindungsgemäße Verfahren zeichnet sich dadurch aus, dass sowohl das Gasvolumen, das flüssige Kühlmedium, als auch ein weiteres Medium zum Austreiben des flüssigen Kühlmediums über ein- und dieselbe Einlassöffnung eingeleitet werden, wobei erfindungsgemäß vorgesehen ist, dass ein Strömungsquerschnitt der zweiten Einlassöffnung nach dem Einleiten des Gasvolumens vergrößert wird, um einen erforderlichen Durchfluss des flüssigen Kühlmediums zu ermöglichen. Ein Verdampfen des flüssigen Kühlmediums im Hohlraum des Kunststoff-Formteils, wie dies aus dem Stand der Technik bekannt ist, kann durch die erfindungsgemäße Verfahrensweise vermieden werden.

Eine besonders günstige Verfahrensweise zeichnet sich dadurch aus, dass der Strömungsquerschnitt durch Verschieben eines Schiebeelementes in Strömungsrichtung vergrößert und durch Verschieben des Schiebeelementes in entgegengesetzter Strömungsrichtung verkleinert wird.

Damit die noch plastische Masse beim Durchströmen des flüssigen Kühlmediums weiterhin an den Formhohlraum angepresst wird, ist vorgesehen, dass der Durchfluss- und/oder der Druck des flüssigen Kühlmediums geregelt bzw. eingestellt wird, wobei das Kühlmedium den Hohlraum bei einem Druck von etwa 1 bis 500 bar, vorzugsweise 100 bis 200 bar durchströmt.

Vorzugsweise wird als flüssiges Kühlmedium Wasser verwendet, wobei jedoch jedes flüssige Kühlmedium eingesetzt werden kann, das eine vergleichbare oder höhere Wärmekapazität aufweist.

Eine besonders bevorzugte Verfahrensweise zeichnet sich dadurch aus, dass die plastische Masse und/oder das Gasvolumen und/oder das Kühlmedium und/oder Gas, vorzugsweise Druckluft, zum Ausblasen des Kühlmediums über die zweite Einlassöffnung in den Formhohlraum und/oder Hohlraum eingeleitet werden. Insbesondere durchströmt das flüssige Kühlmedium den Hohlraum als Teil eines Strömungskreislaufs.

Vorrichtungsmäßig wird die Aufgabe im Wesentlichen dadurch gelöst, dass die zweite Einlassöffnung einen Strömungskanal mit einstellbarem Strömungsquerschnitt aufweist. Auf diese Weise kann das Kühlmedium den Hohlraum in ausreichender Menge durchströmen und die aufgenommene Wärme abführen. Durch Zuführen von frischem, d. h. kaltem Kühlmedium und Abführen von erwärmtem Kühlmedium wird insgesamt der Kühlvorgang beschleunigt.

Zur Einstellung des Strömungsquerschnittes weist die zweite Einlassöffnung ein vorzugsweise in Strömungsrichtung verschiebbares kolben- oder ventilförmiges Schiebeelement auf. In einer ersten Stellung gibt das Schiebeelement einen Strömungsquerschnitt frei, der geeignet ist, das Gasvolumen zur Ausbildung des Hohlraums einzuleiten. Anschließend wird das Schiebeelement derart in Strömungsrichtung verschoben, dass ein zweiter Strömungsquerschnitt freigegeben wird, der geeignet ist, das flüssige Kühlmedium wie Wasser in ausreichender Menge in den Hohlraum einzuleiten.

In besonderer Ausführungsform ist die Auslassöffnung über ein Förderaggregat zur Bildung des Strömungskreislaufes mit der zweiten Einlassöffnung verbunden. In einem mit dem Förderaggregat verbundenes Reservoir ist das vorzugsweise gekühlte Kühlmedium enthalten und kann über das Förderaggregat in beliebiger Menge in den Hohlraum gefördert werden. Das Förderaggregat ist vorzugsweise als Pumpe ausgebildet. Zur Druckregelung des flüssigen Kühlmediums ist in dem Strömungskreislauf ein Drosselelement angeordnet.

Damit ein Entweichen der plastischen Masse während des Formvorgangs, d. h. während des Einspritzens der plastischen Masse und anschließender Injizierung des Gasvolumens ausgeschlossen ist, ist der Auslass mit einem Verschlusselement wie Schieber verschließbar, der den Auslass zum Ablassen des Gasvolumens und/oder des Kühlmediums zum Strömungskreislauf hin freigibt. Vorzugsweise ragt der Schieber im geschlossenen Zustand zumindest bereichsweise in den Formhohlraum hinein, so dass dieser beim Einspritzen der plastischen Masse zumindest bereichsweise von dieser umschlossen wird.

Um den durch das Gasvolumen gebildeten Hohlraum von Rückständen des flüssigen Kühlmediums zu befreien, ist die zweite Einlassöffnung mit einer Druckluftquelle zum Ausblasen des Hohlraums verbunden. In bevorzugter Ausführungsform ist die zweite Einlassöffnung als Injektor ausgebildet, der über jeweils eine Zuleitung mit dem Gasreservoir, dem Druckluftreservoir sowie dem Kühlmittelreservoir verbunden ist, wobei im Verlauf jeder Zuleitung ein Ventil angeordnet ist. Diese Ausführungsform zeichnet sich besonders dadurch aus, dass über eine Einlassöffnung drei verschiedene Medien in den Hohlraum eingeleitet werden können. Die zweite Einlassöffnung kann koaxial zu der ersten Einlassöffnung zum Einspritzen der plastischen Masse in den Formhohlraum angeordnet sein. Dazu wird der Injektor von der sich in dem Formhohlraum ausbreitenden plastischen Masse umschlossen und kann sodann mit dem Gasvolumen zur Ausbildung des Hohlraums beaufschlagt werden. Anschließend erfolgt das Durchströmen des Hohlraums mit dem flüssigen Kühlmedium, gefolgt von dem Einlassen der Druckluft in den Hohlraum des Formteils.

Eine Verfahrensweise mit eigenständigem Erfindungscharakter zeichnet sich dadurch aus, dass als Gas zum Bilden des Hohlraums getrocknete Druckluft verwendet wird. Die Trockung der Druckluft kann mittels eines Adsorbtionstrockners durchgeführt werden. Auf diese Weise kann das teure Stickstoffgas ersetzt werden, dass nach dem Stand der Technik zur Bildung des Hohlraumes verwendet wird. Zur weiteren Verbesserung der Kühlwirkung kann die getrocknete Druckluft vorgekühlt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der einer Zeichnung zu entnehmenden bevorzugten Ausführungsbeispiels.

Es zeigen:
- Fig. 1: eine schematische Darstellung einer Vorrichtung zum Herstellen eines Kunststoff-Formteils in einem ersten Verfahrensschritt,
- Fig. 2: die Vorrichtung nach Anspruch 1 in einem zweiten Verfahrensschritt und
- Fig. 3a, 3b: eine Schnittdarstellung einer zweiten Einlassöffnung mit veranderbarem Strömungsquerschnitt.

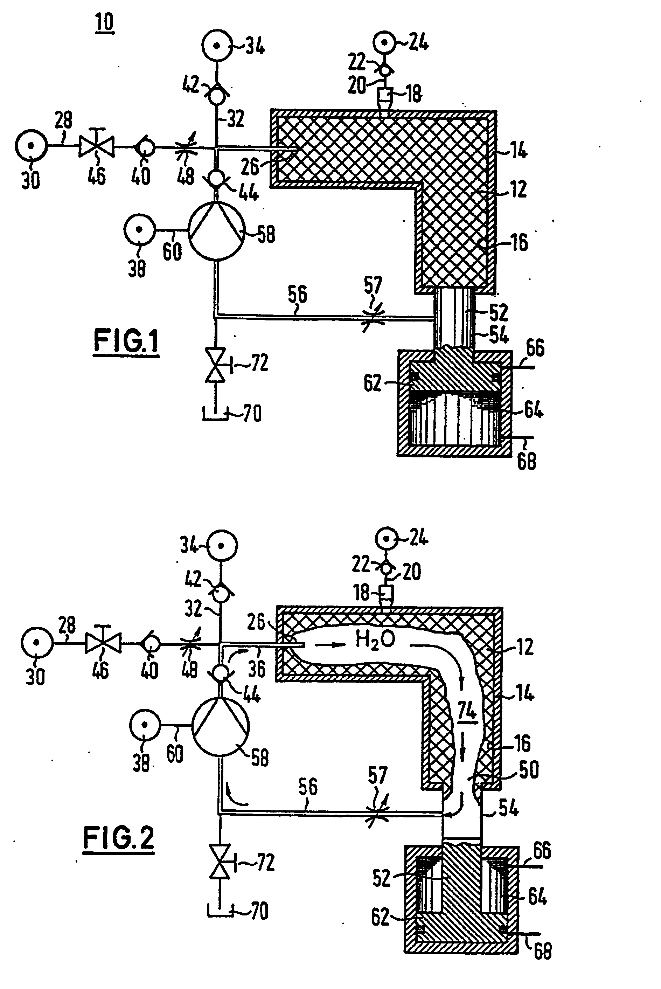

In den Fig. 1 und 2 sind gleiche Elemente mit den gleichen Bezugsziffern versehen. Fig. 1 zeigt eine Vorrichtung 10 zur Herstellung eines Kunststoff-Formteils 12, umfassend ein Formwerkzeug 14 mit einem die Form des Kunststoff-Formteils vorgebenden Formhohlraum 16. Das Formwerkzeug 14 weist eine erste Einlassöffnung 18 auf, über den eine plastische Masse, wie z. B. thermoplastischer Kunststoff, in den Formhohlraum 16 eingespritzt wird. Die Einlassöffnung 18 ist vorzugsweise als Düse ausgebildet und über eine Leitung 20 sowie ein Ventil 22 mit einem die plastische Masse enthaltenden Reservoir 24 verbunden.

Des Weiteren weist das Formwerkzeug 14 eine zweite Einlassöfnung 26 auf, die gegebenenfalls koaxial zu der ersten Einlassöffnung 18 angeordnet sein kann. Die zweite Einlassöffnung 26, die im Ausführungsbeispiel von einer die erste Einlassöffnung 18 nicht aufweisenden Wandung des Formwerkzeugs 14 ausgeht, umfasst vorzugsweise einen Injektor, der über eine erste Leitung 28 mit einem Gasreservoir 30, eine zweite Leitung 32 mit einem Druckluftreservoir 34 und über eine dritte Leitung 36 mit einem Kühlmittelreservoir 38 verbunden ist. Im Verlauf der Leitungen 28, 32, 36 sind jeweils Ventile 40, 42, 44 angeordnet, um einen gerichteten Strömungsfluss zu gewährleisten. Im Verlauf der ersten Leitung 28 sind zusätzlich eine Absperrarmatur 46 sowie eine Drosselarmatur 48 vorgesehen.

Ferner umfasst das Formwerkzeug 16 eine Auslassöffnung 50, die über ein Verschlusselement 52 wie Schieber verschließbar ist. Das Verschlusselement 52 ist in einem Verbindungsstück 54 verschiebbar angeordnet, das über eine Verbindungsleitung 56 mit einem als Pumpe ausgebildeten Förderaggregat 58 verbunden ist und zusammen mit dem zweiten Leitungsstück 36, dem Ventil 44 und dem zweiten Einlass 26 einen geschlossenen Strömungskreislauf bildet. Das Förderaggregat 58 ist über eine Leitung 60 mit dem Kühlmedium-Reservoir 38 verbunden. Im Verlauf des Strömungskreislaufes, vorzugsweise in der Verbindungsleitung 56, ist ein Drosselelement 57 zur Regelung und/oder Steuerung des Druckes und/oder des Strömungsflusses angeordnet.

Das Verschlusselement 52 umfasst einen vorzugsweise zylinderförmigen Schieber zum Verschließen der Auslassöffnung 50 sowie eine kolbenartige Anformung 62, die in einem Zylinder 64 verschiebbar angeordnet ist. Über Zuleitungen 66, 68 kann der Zylinder 64 mit einem Druckmedium beaufschlagt werden, um ein Verschieben des Verschlusskolbens 52 zu ermöglichen. Der zylinderförmige Schieber ragt im geschlossenen Zustand zumindest bereichsweise in den Formhohlraum des Formwerkzeugs hinein.

Zum Entleeren des Strömungskreislaufes ist ein Tank 70 vorgesehen, in den das Kühlmedium durch Öffnen einer im Verlauf der Leitung 56 angeordneten Absperrarmatur 72 abgefüllt werden kann.

Fig. 2 zeigt die Vorrichtung zur Herstellung eines Kunststoff-Formteils in einem Zeitpunkt, in dem der thermoplastische Kunststoff den Formhohlraum 16 des Formwerkzeugs zumindest bereichsweise, im dargestellten Ausführungsbeispiel vollständig ausfüllt. Nach dem Einspritzen des plastischen Materials wird das Ventil 40 zur Einleitung eines Gasvolumens, vorzugsweise getrocknete Druckluft, zur Ausbildung eines Hohlraums 74, wie dieser in Fig. 2 dargestellt ist, geöffnet. Durch das Einleiten des Gasvolumens unter Druck- und/oder Volumenkontrolle wird der Hohlraum 74 gebildet und die plastische Masse wird an die Innenwandung des Formhohlraums gepresst. Während dieses Verfahrensschrittes ist die Auslassöffnung 50 durch das Verschlusselement 52 geschlossen.

Erfindungsgemäß wird das Kunststoff-Formteil durch Zuführen von flüssigem Kühlmedium, vorzugsweise Wasser, innenseitig gekühlt, wobei der Hohlraum 74 Teil eines Strömungskreislaufes ist. Durch Öffnen des Verschlusselementes 52 wird die Auslassöffnung 50 mit der Leitungsverbindung 56 verbunden, die über das Förderaggregat 38 mit der Einlassöffnung 26 verbunden ist. Aus dem Kühlmedium-Reservoir 38 wird über das Förderaggregat 58 Kühlmedium in den Hohlraum 74 gefördert und dabei aufgrund der hohen Wärmekapazität des Kühlmediums Wasser erhebliche Wärmemengen abführen kann.

Anschließend wird der Injektor 26 über die Leitung 32 und das Ventil 42 mit dem Druckluftreservoir 34 verbunden, so dass der Hohlraum mittels Druckluft ausgeblasen werden kann, um Rückstände des Kühlmediums aus dem Hohlraum zu entfernen. Gleichzeitig wird durch das Ausblasen eine weitere Abkühlung des Formteils erreicht.

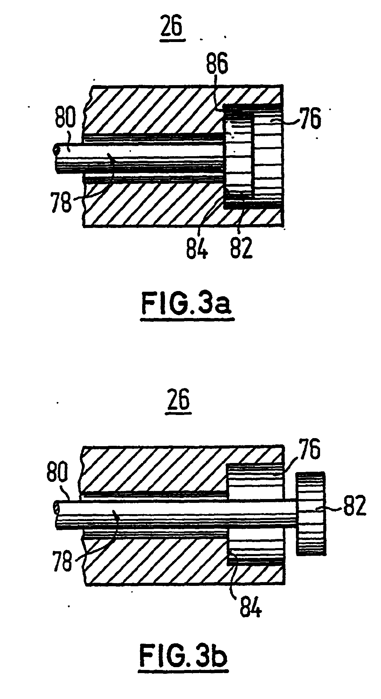

Fig. 3a und 3b zeigen eine Schnittdarstellung der als Injektor ausgebildeten zweiten Einlassöffnung 26. Innerhalb eines Strömungskanals 76 ist ein Schiebeelement 78 axial, d. h. in Strömungsrichtung verschiebbar angeordnet. Dabei ist das Schiebeelement 78 ventilförmig ausgebildet, mit einem Stößel 80 und einem Ventilteller 82, der einen Strömungsquerschnitt freigibt. In einer ersten Stellung befindet sich der Ventilteller 82 im Bereich eines Ventilsitzes 84 und gibt einen ersten (kleineren) Strömungsquerschnitt frei, der geeignet ist, das erforderliche Gasvolumen zur Ausbildung des Hohlraumes zu leiten. In einer zweiten Stellung (gestrichelt dargestellt) ist der Ventilteller 82 mit Abstand zum Ventilsitz 84 angeordnet, um einen zweiten (größeren) Strömungsquerschnitt freizugeben, der ein Vielfaches größer ist als der erste (kleinere) Strömungsquerschnitt 86, damit die Strömung des flüssigen Kühlmediums und des Gases zum Ausblasen des Kühlmediums nicht behindert wird.

## Patentansprüche

1. Verfahren und zur Herstellung eines Kunststoff-Formteils (12), umfassend die Verfahrensschritte:
a) Einspritzen einer plastischen Masse in einen geschlossenen Formhohlraum (16) durch eine erste Einlassöffnung (18);
b) Einleiten eines Gasvolumens in die plastische Masse über eine zweite Einlassöffnung (26) zur Ausbildung eines Hohlraums (74);
c) Ablassen des Gasvolumens aus dem Hohlraum (74) durch eine Auslassöffnung (50);
d) Vergrößern eines Strömungsquerschnittes der zweiten Einlassöffnung (26) und Einleiten eines flüssigen Kühlmediums durch die zweite Einlassöffnung (26) und Durchströmen des Hohlraums (74) mit dem flüssigen Kühlmedium bei geregeltem Druck und/oder Volumen;
e) Einleiten eines weiteren Mediums über die zweite Einlassöffnung (26) zum Austreiben des flüssigen Kühlmediums aus dem Hohlraum (74).

2. Verfahren nach Anspruch,
**dadurch gekennzeichnet**,
dass der Strömungsquerschnitt durch Verschieben eines Schiebeelementes (78) in Strömungsrichtung vergrößert und durch Verschieben des Schiebeelementes (78) entgegengesetzt zur Strömungsrichtung verkleinert wird.

3. Verfahren nach zumindest einem der vorhergehenden Ansprüche,
**dadurch gekennzeichnet**,
dass der Durchfluss und/oder der Druck des flüssigen Kühlmediums wie Wasser geregelt bzw. eingestellt wird.

4. Verfahren nach zumindest einem der vorhergehenden Ansprüche,
**dadurch gekennzeichnet**,
dass die plastische Masse und/oder das Gasvolumen und/oder das Kühlmedium und/oder die Druckluft zum Ausblasen des Kühlmediums über die zweite Einlassöffnung (26) in den Formhohlraum (16) und/oder Hohlraum (74) eingeleitet werden.

5. Verfahren nach Anspruch 1,
**dadurch gekennzeichnet**,
dass als Gasvolumen zur Ausbildung des Hohlraumes getrocknete, vorzugsweise gekühlte Druckluft verwendet wird.

6. Verfahren zur Herstellung eiens Kunststoff-Formteils, umfassend die Verfahrensschritte
a) Einspritzen einer plastischen Masse in einen geschlossenen Formhohlraum (16) durch eine erste Einlassöffnung (18);
b) Einleiten getrockneter Druckluft in die plastische Masse über eine zweite Einlassöffnung (26) zur Ausbildung eines Hohlraums (74);
c) Ablassen der getrockneten Druckluft aus dem Hohlraum (74) durch eine Auslassöffnung (50).

7. Vorrichtung (10) zur Herstellung eines Kunststoff-Formteils (12), umfassend ein Formwerkzeug (14) mit einem die Form des Kunststoff-Formteils vorgebenden Formhohlraum (16), wobei das Formwerkzeug eine erste Einlassdüse (18) zum Einleiten einer plastischen Masse in den Formhohlraum (16), eine zweite Einlassdüse (26) zum Einleiten eines Gasvolumens zur Ausbildung eines Hohlraums (74) und/oder zum Einleiten eines Kühlmediums in den Hohlraum (74) sowie eine Auslassöffnung (50) mit Verschlusselement (52) zum Ablassen des Gasvolumens und/oder des Kühlmediums aufweist ,
**dadurch gekennzeichnet**,
dass die zweite Einlassöffnung (26) einen Strömungskanal mit einstellbarem Strömungsquerschnitt aufweist.

8. Vorrichtung nach Anspruch 7,
**dadurch gekennzeichnet**,
dass die zweite Einlassöffnung (26) ein vorzugsweise in Strömungsrichtung verschiebbares kolben- oder ventilförmiges Schiebeelement (78) zur Einstellung des Strömungsquerschnittes aufweist, wobei insbesondere die zweite Einlassöffnung mit einer Druckluftquelle (24) zum Ausblasen des Hohlraumes (74) verbunden ist.

9. Vorrichtung nach Anspruch 7 oder 8,
**dadurch gekennzeichnet**,
dass die Auslassöffnung (50) über ein mit einem das Kühlmedium enthaltenem Reservoir (38) verbundenen Förderaggregat (58) zur Bildung eines Strömungskreislaufes mit der zweiten Einlassöffnung (26) verbunden ist, wobei in dem Strömungskreislauf ein Drosselelement angeordnet ist.

10. Vorrichtung nach zumindest einem der Ansprüche 7 bis 9,
**dadurch gekennzeichnet**,
dass das Verschlusselement (52) einen Schieber umfasst, der im geschlossenen Zustand zumindest bereichsweise in den Formhohlraum hineinragt und/oder dass der Strömungskreislauf einen Tank (70) zum Ablassen des flüssigen Kühlmediums aufweist.

11. Vorrichtung nach zumindest einem der Ansprüche 7 bis 10,
**dadurch gekennzeichnet**,
dass die zweite Einlassöffnung (26) als Injektor ausgebildet ist und über jeweils eine Zuleitung (28, 32, 36) mit dem Gas-Reservoir (30), dem Druckluft-Reservoir (34) sowie dem Kühlmittel-Reservoir (38) verbunden ist, wobei im Verlauf jeder Zuleitung ein Ventil (40, 42, 44) angeordnet ist.
